# EUROPEAN PATENT APPLICATION

(11) **EP 4 825 643 A1**
(43) Date of publication of application: **21.10.2026**
(21) Application number: 25886214.3
(22) Date of filing: 01.10.2025
(51) Int. Cl.: B60L 53/57, B60L 53/53, B60L 53/12, B64U 20/80, B64U 101/25

(54) **ELECTRIC VEHICLE CHARGING SYSTEM, AND SERVER FOR SUPPORTING ELECTRIC VEHICLE CHARGING**

(30) Priority: 01.11.2024 KR 20240153267
(71) Applicant: LG Energy Solution, Ltd., Seoul 07335 (KR)
(72) Inventor: HYEON, Byeonggyu, Daejeon 34122 (KR); OH, Seung Take, Daejeon 34122 (KR)
(74) Representative: BCKIP Part mbB
(86) International application number: PCT/KR2025/015579
(87) International publication number: WO 2026/095388

(57) **Abstract**

An electric vehicle charging system according to an embodiment of the present invention may comprise: a server; and a drone including a battery and equipped with a wireless charging pad. Here, when a call request including location information of an electric vehicle is received from a user terminal, the server controls the drone to move to the location of the electric vehicle, and the drone, after moving to the location of the electric vehicle, supplies power stored in the battery to the electric vehicle by using the wireless charging pad.

## Description

### [Technical Field]

This application claims priority to and the benefit of Korean Patent Application No.10-2024-0153267 filed in the Korean Intellectual Property Office on November 1, 2024 the entire contents of which are incorporated herein by reference.

The present disclosure relates to an electric vehicle charging system and a server for supporting electric vehicle charging, and more particularly, to an electric vehicle charging system capable of supplying emergency power to electric vehicles using a drone equipped with a battery, and a server for supporting electric vehicle charging.

### [Background Art]

Electric vehicles are emerging as the most effective solution to reduce greenhouse gas emissions and improve energy efficiency and thus, consumer interest and demand for electric vehicles are growing. Unlike conventional internal combustion engine vehicles, electric vehicles (EVs) require components such as batteries, electric motors, inverters, converters, and battery management systems (BMSs).

The electric vehicles generally use rechargeable secondary batteries. The secondary batteries, capable of recharging and reuse, are manufactured as battery modules or packs by electrically connecting multiple battery cells based on the required output capacity, serving as power sources for diverse applications. These batteries are used in small, high-tech electronic devices like smart phones, as well as a variety of fields including electric bicycles, electric vehicles, and energy storage systems (ESS).

A prerequisite for the widespread adoption of electric vehicles is the establishment of a charging infrastructure, including EV charging stations. The EV charging stations typically draw power from the power grid or solar power generation facilities to charge electric vehicles. Recently, electric vehicle charging stations have emerged, taking into account power fluctuations due to weather and time of day, storing grid power or solar power in energy storage systems and utilizing the energy storage systems as an additional power source to charge electric vehicles.

Electric vehicles should travel to a charging station to recharge when their battery's State of Charge (SOC) drops. However, if the remaining SOC prevents travel to a charging station, charging assistance is needed to extend the driving range enough to allow travel to a charging station.

Among the prior art documents relevant to the present disclosure, KR 10-2023-0114771 A is of some relevance.

### [Detailed Description of the Invention]

### [Technical Problem]

To obviate one or more problems of the related art, embodiments of the present disclosure provide an electric vehicle charging system capable of supplying emergency power to electric vehicles using a drone equipped with a battery.

To obviate one or more problems of the related art, embodiments of the present disclosure also provide a server configured to support electric vehicle charging in conjunction with a drone equipped with a battery.

To obviate one or more problems of the related art, embodiments of the present disclosure also provide a method of supporting electric vehicle charging, performed by the server.

### [Technical Solution]

In order to achieve the objective of the present disclosure, an electric vehicle charging system may include a server; and a drone including a battery and a wireless charging pad. Here, the server is configured to, upon receiving a call request including location information of an electric vehicle from a user terminal, control the drone to move to the location of the electric vehicle, and wherein the drone is configured to move to the location of the electric vehicle and supply power stored in the battery to the electric vehicle using the wireless charging pad.

The wireless charging pad may be formed of a flexible material and includes a power transmission coil therein.

The wireless charging pad may be configured to be a rollable structure, and when moved to the location of the electric vehicle, the rollable structure may unfold and supply power to the electric vehicle.

The drone may include a fixing unit configured to securely support the wireless charging pad, and when moved to the location of the electric vehicle, the fixing unit may be released so that the wireless charging pad unfolds downward.

When charging of the electric vehicle is completed, the drone may retract the wireless charging pad to retrieve the wireless charging pad.

The server may control the drone to hover above the electric vehicle when the drone has moved to the location of the electric vehicle.

When the drone has moved to the location of the electric vehicle, the server may identify the electric vehicle based on vehicle identification information received from the user terminal and control the drone to land on the top surface of the electric vehicle.

When a charging request signal is received from the user terminal, the server may transmit a power output control signal to the drone so that power stored in the battery is supplied to the electric vehicle.

According to another embodiment of the present disclosure, a server configured to support electric vehicle charging, the server communicating with a drone, which includes a battery and a wireless charging pad, and a user terminal of an electric vehicle driver, may include at least one processor and a memory storing at least one instruction executed by the at least one processor.

The at least one instruction may include an instruction to control the drone to move to the location of the electric vehicle when a call request including location information of the electric vehicle is received from the user terminal; and an instruction to control the drone to supply power stored in the battery to the electric vehicle using the wireless charging pad when the drone has moved to the location of the electric vehicle.

The instruction to control the drone to supply power stored in the battery to the electric vehicle may include an instruction to transmit a signal to the drone to release the fixed support of the wireless charging pad so that the wireless charging pad, which is formed as a rollable structure, unfolds.

The instruction to control the drone to supply power stored in the battery to the electric vehicle may include an instruction to transmit a signal to the drone to retract the wireless charging pad so that the wireless charging pad is retrieved when charging of the electric vehicle is completed.

The instruction to control the drone to move to the location of the electric vehicle may include, if the drone moves to the location of the electric vehicle, an instruction to control the drone to hover above the electric vehicle.

The instruction to control the drone to move to the location of the electric vehicle may include an instruction to, if the drone moves to the location of the electric vehicle, identify the electric vehicle based on vehicle identification information received from the user terminal and to control the drone to land on the top surface of the electric vehicle.

The instruction to control the drone to supply power stored in the battery to the electric vehicle may include an instruction to transmit a power output control signal to the drone so that the power stored in the battery is supplied to the electric vehicle, if a charging request signal is received from the user terminal.

According to another embodiment of the present disclosure, an electric vehicle charging support method performed by a server, wherein the server communicates with a user terminal of an electric vehicle driver and a drone including a battery and a wireless charging pad, may include, when a call request including location information of an electric vehicle is received from the user terminal, controlling the drone to move to the location of the electric vehicle; and, when the drone has moved to the location of the electric vehicle, controlling the drone to supply power stored in the battery to the electric vehicle using the wireless charging pad.

### [Advantageous Effects]

According to embodiments of the present disclosure, it is possible to quickly supply power to an electric vehicle requiring emergency power.

### [Brief Description of the Drawings]

FIG. 1 is a diagram illustrating the configuration of an electric vehicle charging system according to embodiments of the present disclosure.
FIG. 2 is a diagram illustrating the configuration of a drone according to embodiments of the present disclosure.
FIG. 3 is a diagram illustrating the structure of a wireless charging pad according to embodiments of the present disclosure.
FIG. 4 is an operational flowchart illustrating an electric vehicle charging support method according to embodiments of the present disclosure.
FIGS. 5 to 7 are reference diagrams for illustrating an electric vehicle charging support method according to embodiments of the present disclosure.
FIG. 8 is a block diagram of a server according to embodiments of the present disclosure.

100: server
200: drone
300: user terminal
400: electric vehicle
800: server

### [Best Modes for Practicing the Disclosure]

The present disclosure may be modified in various forms and have various embodiments, and specific embodiments thereof are shown by way of example in the drawings and will be described in detail below. It should be understood, however, that there is no intent to limit the present disclosure to the specific embodiments, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein are for the purpose of describing specific embodiments only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

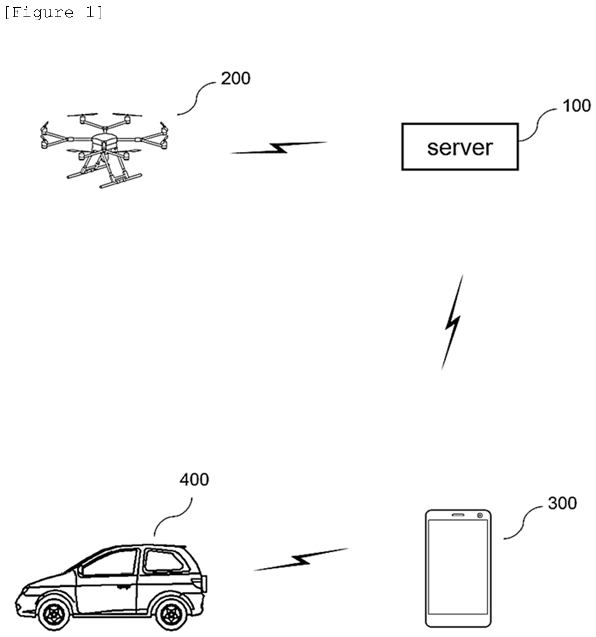

FIG. 1 is a diagram illustrating the configuration of an electric vehicle charging system according to embodiments of the present disclosure.

Referring to FIG. 1, the electric vehicle charging system may include a server 100 and a drone 200. The server 100 may be connected to a drone 200 and a user terminal 300 via a network, and the user terminal 300 may be connected to an electric vehicle 400 via a network.

The server 100 may be a computing device configured to perform a series of operations to support charging of the electric vehicle 400 in conjunction with the drone 200 and the user terminal 300. Here, the server 100 may be managed by a company providing electric vehicle charging services.

The drone 200 may be an unmanned aerial vehicle (UAV) that operates using stored power from an internal battery as its driving force. The drone 200 may include a battery, an autonomous flight module, a GPS module, a controller, and a communication module within its main body.

The drone 200 may move to a location corresponding to the location coordinates received from the server 100 by operating according to a control signal received from the server 100 or using an autonomous flight module.

The drone 200 according to embodiments of the present disclosure may be equipped with a wireless charging pad.

The wireless charging pad may be formed of a flexible material and include a power transmission coil inside. The power transmission coil may be electrically connected to a battery provided within the drone 200. Upon receiving a power supply initiation signal from the server 100, the drone 200 may output stored power from the battery and apply current to the power transmission coil.

The wireless charging pad may be formed as a rollable structure. Here, the wireless charging pad may be unfolded by a user. Alternatively, the wireless charging pad may be fixedly supported to the drone 200 by a fixing unit and configured to unfold downward if the fixing unit is released.

The user terminal 300 may be a computing device used by the electric vehicle driver. For example, the user terminal 300 may be a mobile phone or tablet PC of the electric vehicle driver or the electric vehicle's navigation device.

The user terminal 300 may be connected to the electric vehicle 400 via a network and may collect state information about the electric vehicle 400. The electric vehicle state information may include one or more of a state of charge (SOC) of the electric vehicle battery and a driving range.

The electric vehicle 400 may include a wireless charging unit. The wireless charging unit may include a power receiving coil. The power receiving coil may be positioned on the inner lower portion of the electric vehicle 400 and electrically connected to the electric vehicle battery.

After the wireless charging pad mounted on the drone 200 is positioned facing the wireless charging unit of the electric vehicle 400, when the wireless charging pad is supplied with power, the wireless charging unit is supplied with power, thereby charging the battery of the electric vehicle.

The user terminal 300 may transmit drone call request information for charging support of an electric vehicle 400 to the server 100. The call request information may include location information of the electric vehicle 400 and may further include one or more of the SOC, driving range, and requested charge amount of the electric vehicle battery. The user terminal 300 may receive the information included in the call request information from the electric vehicle driver or collect the information from the electric vehicle 400.

Upon receiving the call request information from the user terminal 300, the server 100 may control the drone 200 to move to the location included in the call request information. For example, if the server 100 transmits the electric vehicle's location information to the drone 200, the drone 200 may use its autonomous flight module to move to the electric vehicle's location. For another example, the server 100 may control the drone 200 in real time based on the location information of the electric vehicle 400 and the location information of the drone 200, thereby causing the drone 200 to move to the location of the electric vehicle.

Once the drone 200 moves to the location of the electric vehicle 400, the drone 200 may use the wireless charging pad to supply power stored in the drone battery to the electric vehicle 400. For example, once the drone 200 moves to the location of the electric vehicle 400, the electric vehicle driver may detach the wireless charging pad mounted on the drone 200 from the drone 200, unfold the rollable wireless charging pad, and then position the wireless charging pad in a position corresponding to the wireless charging unit located under the electric vehicle 400. Thereafter, the drone 200 may output the stored power in its battery to the wireless charging pad, thereby charging the electric vehicle battery.

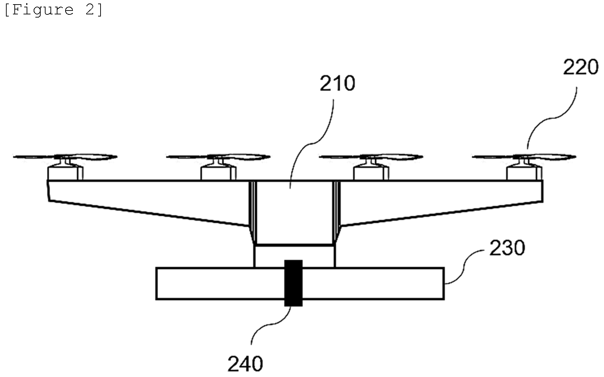

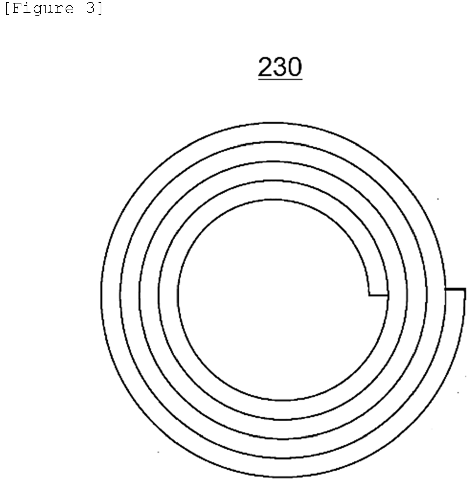

FIG. 2 is a diagram illustrating the configuration of a drone according to embodiments of the present disclosure and FIG. 3 is a diagram illustrating the structure of a wireless charging pad according to embodiments of the present disclosure.

Referring to FIG. 2, the drone 200 may include a main body 210 and one or more wings 220 coupled to the main body 210.

The main body 210 may be equipped with a battery, an autonomous flight module, a GPS module, a control module, and a communication module.

The drone 200 may be equipped with a wireless charging pad 230. Furthermore, the drone 200 may include a fixing unit 240 that securely supports the wireless charging pad 230.

The fixing unit 240 may surround at least a portion of the outer surface of the wireless charging pad 230 and be detachably coupled to the main body 210. Here, the fixing unit 240 may be controlled by the control module. When controlled to be disengaged, one end of the fixing unit 240 remains fixed to the main body 210 while the other end detaches from the main body 210, allowing the wireless charging pad 230 to be separated from the drone 200.

The wireless charging pad 230 may be formed of a flexible material and include a power transmission coil inside. The power transmission coil may be electrically connected to a battery provided inside the drone 200.

Referring to FIG. 3, the wireless charging pad 230 may be formed as a rollable structure. Here, the wireless charging pad 230 may be connected to the main body 210 via a connection cable and the connection cable may include a power supply line that electrically connects the power transmission coil and the battery.

The wireless charging pad 230 may be unfolded by a user or unfolded downward when the fixing unit 240 is released.

The drone 200 may include a winding unit for retrieving the wireless charging pad 230. Here, the winding unit is a device for winding the wireless charging pad 230 in an unfolded state into a cylindrical shape. When charging of the electric vehicle 400 is completed, the drone 200 may wind and retract the wireless charging pad 230 through the winding unit and control the fixing unit 240 to fix the retrieved wireless charging pad 230 to the main body 210.

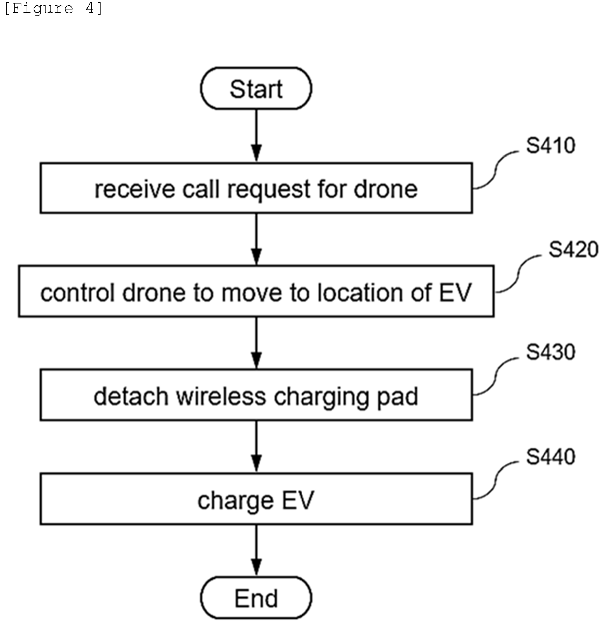

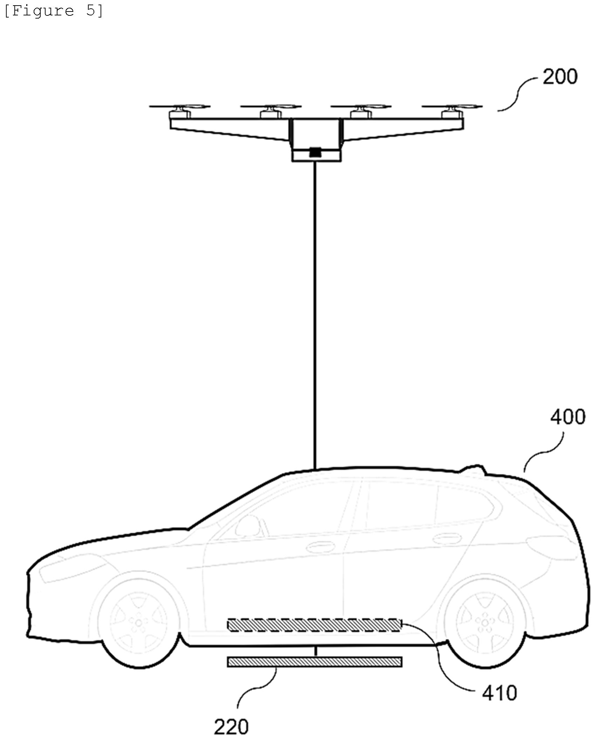

FIG. 4 is an operational flowchart illustrating an electric vehicle charging support method according to embodiments of the present disclosure, and FIGS. 5 to 7 are reference diagrams for illustrating an electric vehicle charging support method according to embodiments of the present disclosure.

The electric vehicle charging support method according to embodiments of the present disclosure may be performed by a server that communicates with a drone, including a battery and a wireless charging pad, and a user terminal of an electric vehicle driver.

Upon receiving a call request for a drone from the user terminal (S410), the server may control the drone to move to the location of the electric vehicle (S420).

Specifically, the user terminal may transmit drone call request information for electric vehicle charging support to the server. The call request information may include the location information of the electric vehicle and may further include one or more of the SOC, driving range, and requested charge amount of the electric vehicle battery. Meanwhile, the user terminal may receive information included in the call request information from the electric vehicle driver or collect the information from the electric vehicle.

Upon receiving the call request information from the user terminal, the server may control the drone to move to the location included in the call request information. For example, if the server transmits the location information of an electric vehicle to a drone, the drone may use its autonomous flight module to navigate to the electric vehicle's location. For another example, the server may control the drone in real time based on the location information of both the electric vehicle and the drone, causing the drone to move to the electric vehicle's location.

Once the drone moves to the electric vehicle's location, the server may control the drone to hover above the electric vehicle. In other words, the drone may hover and wait above the electric vehicle to supply power to the electric vehicle.

Once the drone has moved to the electric vehicle's location, the server may control the drone to use the wireless charging pad to supply power stored in its battery to the electric vehicle.

Specifically, the server may control the detachment of the wireless charging pad mounted on the drone (S430) and then control the drone to charge the electric vehicle via the wireless charging pad (S440).

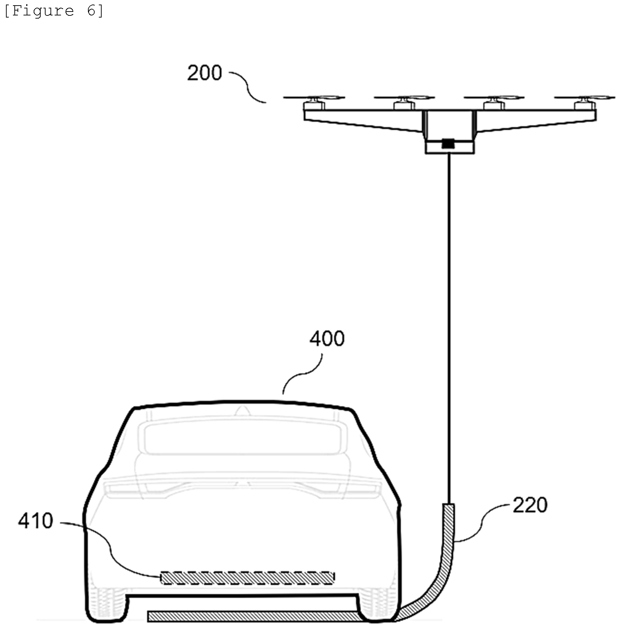

For example, the server may transmit a signal to the drone to release the fixed support of the wireless charging pad, allowing the wireless charging pad, formed as a rollable structure, to unfold. In a hovering state, the drone may release the fixing unit that securely supports the wireless charging pad, thereby separating the wireless charging pad from the drone body and allowing it to unfold downward. Thereafter, as illustrated in FIGS. 5 and 6, the wireless charging pad 220 may be positioned by the electric vehicle driver to correspond to the wireless charging unit 410 located beneath the electric vehicle 400. The drone may output stored power in its battery to the wireless charging pad 220 in response to a power output control signal from the server, thereby charging the electric vehicle battery.

In S440, upon receiving a charging request signal from the user terminal, the server may transmit a power output control signal to the drone so that the power stored in the battery is supplied to the electric vehicle. Here, the charging request signal may be input by the user to the user terminal, indicating that the electric vehicle is ready for charging.

For example, as illustrated in FIGS. 5 and 6, when the wireless charging pad 220 is properly positioned corresponding to the wireless charging unit 410 and charging preparation is complete, the electric vehicle driver may input a charging start signal to the user terminal. Thereafter, the user terminal may transmit a charging request signal to the server to request the initiation of electric vehicle charging using the drone. The server may then send a power output control signal to the drone, causing the drone to output stored power in its battery to the wireless charging pad.

Once the drone has moved to the location of the electric vehicle in S420, the server may control the drone to land on the top surface of the electric vehicle. In other words, the drone may land on the top surface of the electric vehicle and charge the electric vehicle. Here, the server may identify the electric vehicle based on vehicle identification information received from the user terminal and control the drone to land on the top surface of the identified electric vehicle.

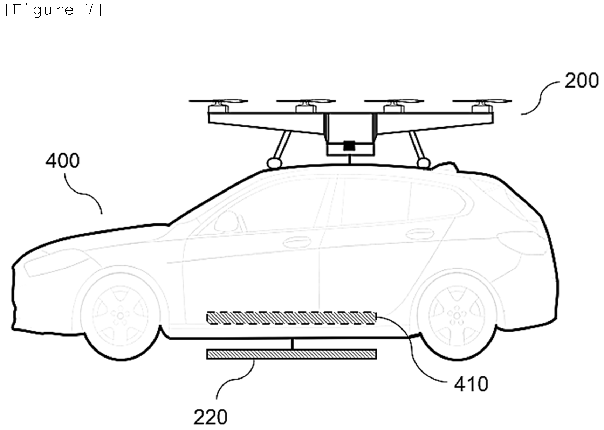

For example, the server may receive a vehicle number from a user terminal and an image captured by a camera module mounted on a drone to identify an electric vehicle requesting charging. Here, the server may use an image analysis algorithm to identify an electric vehicle with the same vehicle number as the received vehicle number. The server may then use the image analysis algorithm to identify the top surface of the electric vehicle and control the drone to land on the top surface of the electric vehicle. As illustrated in FIG. 7, once the drone has landed, the server may control the wireless charging pad mounted on the drone to detach and then control the drone to charge the electric vehicle via the wireless charging pad.

At step S440, the server may determine the charge amount of the electric vehicle based on one or more of the drone battery's SOC, the battery SOC of electric vehicle, the driving range, the requested charge amount, and the distance between the electric vehicle and a charging station. For example, the server may calculate the charge amount that allows the electric vehicle to drive to the charging station based on battery SOC of the electric vehicle, the driving range, and the distance between the electric vehicle and the nearest charging station.

Once charging of the electric vehicle is complete, a signal may be sent to the drone to retract the wireless charging pad so that it can be retrieved. Afterwards, the drone may activate the winding unit to retract and retrieve the unfolded wireless charging pad and control the fixing unit to secure the retracted wireless charging pad to the drone body.

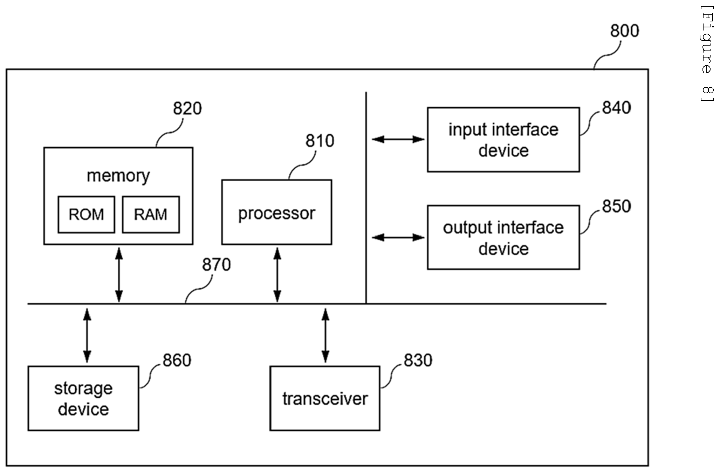

FIG. 8 is a block diagram of a server according to embodiments of the present disclosure.

The server 100 according to embodiments of the present disclosure may be linked to a drone, including a battery and a wireless charging pad, and a user terminal of an electric vehicle driver.

The server 800 may include at least one processor 810, a memory 820 storing at least one instruction executed by the processor, and a transceiver 830 connected to a network and performing communication.

The at least one instruction may include an instruction to control the drone to move to the location of the electric vehicle when a call request including location information of the electric vehicle is received from the user terminal; and an instruction to control the drone to supply power stored in the battery to the electric vehicle using the wireless charging pad when the drone has moved to the location of the electric vehicle.

The instruction to control the drone to supply power stored in the battery to the electric vehicle may include an instruction to transmit a signal to the drone to release the fixed support of the wireless charging pad so that the wireless charging pad, which is formed as a rollable structure, unfolds.

The instruction to control the drone to supply power stored in the battery to the electric vehicle may include an instruction to transmit a signal to the drone to retract the wireless charging pad so that the wireless charging pad is retrieved when charging of the electric vehicle is completed.

The instruction to control the drone to move to the location of the electric vehicle may include, if the drone moves to the location of the electric vehicle, an instruction to control the drone to hover above the electric vehicle.

The instruction to control the drone to move to the location of the electric vehicle may include an instruction to, if the drone moves to the location of the electric vehicle, identify the electric vehicle based on vehicle identification information received from the user terminal and to control the drone to land on the top surface of the electric vehicle.

The instruction to control the drone to supply power stored in the battery to the electric vehicle may include an instruction to transmit a power output control signal to the drone so that the power stored in the battery is supplied to the electric vehicle, if a charging request signal is received from the user terminal.

The server 800 according to embodiments of the present disclosure may further include an input interface device 840, an output interface device 850, a storage device 860, etc. Respective components included in the server 800 may be connected by a bus 870 and can communicate with each other.

Here, the processor 810 may mean a central processing unit (CPU), a graphics processing unit (GPU), or a dedicated processor on which methods according to embodiments of the present disclosure are performed. Furthermore, the memory may include one or more of a volatile/transitory recording medium and a non-volatile/non-transitory recording medium. For example, the memory may include at least one of a read-only memory (ROM) and a random access memory (RAM), and may include an Electrically Erasable Programmable Read-only Memory (EEPROM).

The operations of the method according to the embodiments of the present disclosure may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present disclosure may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present disclosure has been described with reference to the exemplary embodiment of the present disclosure, but those skilled in the art may appreciate that the present disclosure may be variously corrected and changed within the range without departing from the spirit and the area of the present disclosure described in the appending claims.

## Claims

1. An electric vehicle charging system comprising:
a server; and
a drone including a battery and a wireless charging pad,
wherein the server is configured to, upon receiving a call request including location information of an electric vehicle from a user terminal, control the drone to move to the location of the electric vehicle, and
wherein the drone is configured to move to the location of the electric vehicle and supply power stored in the battery to the electric vehicle using the wireless charging pad.

2. The electric vehicle charging system of claim 1, wherein the wireless charging pad is formed of a flexible material and includes a power transmission coil therein.

3. The electric vehicle charging system of claim 1, wherein the wireless charging pad is configured to be a rollable structure,and
when moved to the location of the electric vehicle, the rollable structure unfolds and supplies power to the electric vehicle.

4. The electric vehicle charging system of claim 3, wherein the drone includes a fixing unit configured to securely support the wireless charging pad, and
wherein, when moved to the location of the electric vehicle, the fixing unit is released so that the wireless charging pad unfolds downward.

5. The electric vehicle charging system of claim 4, wherein, when charging of the electric vehicle is completed, the drone winds the wireless charging pad to retrieve the wireless charging pad.

6. The electric vehicle charging system of claim 1, wherein the server controls the drone to hover above the electric vehicle when the drone has moved to the location of the electric vehicle.

7. The electric vehicle charging system of claim 1, wherein, when the drone has moved to the location of the electric vehicle, the server identifies the electric vehicle based on vehicle identification information received from the user terminal and controls the drone to land on the top surface of the electric vehicle.

8. The electric vehicle charging system of claim 1, wherein, when a charging request signal is received from the user terminal, the server transmits a power output control signal to the drone so that power stored in the battery is supplied to the electric vehicle.

9. A server configured to support electric vehicle charging, communicating with a user terminal of an electric vehicle driver and a drone which includes a battery and a wireless charging pad, the server comprising:
at least one processor; and
a memory storing at least one instruction executed by the at least one processor,
wherein the at least one instruction includes:
an instruction to control the drone to move to the location of the electric vehicle when a call request including location information of the electric vehicle is received from the user terminal; and
an instruction to control the drone to supply power stored in the battery to the electric vehicle using the wireless charging pad when the drone has moved to the location of the electric vehicle.

10. The server of claim 9, wherein the instruction to control the drone to supply power stored in the battery to the electric vehicle includes:
an instruction to transmit a signal to the drone to release the fixed support of the wireless charging pad so that the wireless charging pad, which is formed as a rollable structure, unfolds.

11. The server of claim 10, wherein the instruction to control the drone to supply power stored in the battery to the electric vehicle includes:
an instruction to transmit a signal to the drone to retract the wireless charging pad so that the wireless charging pad is retrieved when charging of the electric vehicle is completed.

12. The server of claim 9, wherein the instruction to control the drone to move to the location of the electric vehicle includes:
if the drone moves to the location of the electric vehicle, an instruction to control the drone to hover above the electric vehicle.

13. The server of claim 9, wherein the instruction to control the drone to move to the location of the electric vehicle includes:
an instruction to, if the drone moves to the location of the electric vehicle, identify the electric vehicle based on vehicle identification information received from the user terminal and to control the drone to land on the top surface of the electric vehicle.

14. The server of claim 9, wherein the instruction to control the drone to supply power stored in the battery to the electric vehicle includes:
an instruction to transmit a power output control signal to the drone so that the power stored in the battery is supplied to the electric vehicle, if a charging request signal is received from the user terminal.

15. An electric vehicle charging support method performed by a server, wherein the server communicates with a user terminal of an electric vehicle driver and a drone including a battery and a wireless charging pad, the method comprising:
when a call request including location information of an electric vehicle is received from the user terminal, controlling the drone to move to the location of the electric vehicle; and
when the drone has moved to the location of the electric vehicle, controlling the drone to supply power stored in the battery to the electric vehicle using the wireless charging pad.
